# EUROPÄISCHE PATENTANMELDUNG

(11) **EP 2 072 248 A1**
(43) Veröffentlichungstag der Anmeldung: **24.06.2009**
(21) Anmeldenummer: 08172264.7
(22) Anmeldetag: 19.12.2008
(51) Int. Cl.: B32B 27/00, E04B 1/74

(54) **Wärmedämmverbundsystem für fassadenverkleidung**

(30) Priorität: 21.12.2007 EP 07123959
(71) Anmelder: BASF SE, 67056 Ludwigshafen (DE)
(72) Erfinder: Boy, Elmar, 67433, Neustadt (DE)

(57) **Zusammenfassung**

Ein Wärmedämmverbundsystem, umfassend eine opake Wärmedämmschicht (1) und eine transparente Deckschicht (2), bei dem die Wärmedämmschicht (1) aus einem Schaumstoff oder Faservlies eines hochtemperaturbeständigen Kunststoffes besteht, sowie Verwendung des Wärmedämmverbundsystems zur Verkleidung von Gebäudefassaden

## Beschreibung

Die Erfindung betrifft ein Wärmedämmverbundsystem, umfassend eine opake Wärmedämmschicht (1) und eine transparente Deckschicht (2), wobei die Wärmedämmschicht (1) aus einem Schaumstoff oder Faservlies eines hochtemperaturbeständigen Kunststoffes besteht, sowie Verwendung des Wärmedämmverbundsystems zur Verkleidung von Gebäudefassaden.

Bei Wärmedämmstoffen sind die grundsätzlichen Wärmeübertragungsmechanismen, Wärmeleitung in Festkörpern, Konvektion in Gasen und Wärmestrahlung, die auch ohne Übertragungsmedium im Vakuum erfolgen kann, so optimiert, dass bei Temperaturgradienten in solchen Materialien insgesamt wenig Wärme transportiert wird. Dies wird meist dadurch erreicht, dass ein schlecht wärmeleitendes Gas mit einem geringst möglichen Feststoff verpackt wird (Schaumstoffe) oder durch eine Faservliesansammlung mit geringem Materialeinsatz die Konvektion der Luft unterdrückt wird.

In einer Schaumstruktur von Wärmedämmstoffen (wie zum Beispiel Schaumstoffen aus expandierbarem Polystyrol (EPS)) steht dem Wärmetransport nur eine geringe Transportmasse für die Wärmeleitung zur Verfügung. Durch Einschluss von Luft in den Schaumzellen kann die niedrige Wärmeleitfähigkeit von ruhender Luft genutzt werden, weil die Konvektion unterdrückt wird.

Gelingt es, ein Gas mit einer niedrigeren Wärmeleitfähigkeit als Luft in den Schaumstoffzellen langzeitig oder dauerhaft einzuschließen, kann mit dem Wärmedämmstoff eine niedrigere Wärmeleitfähigkeit, als die von ruhender Luft erzielt werden. Beispiele hierfür sind Polystyrolextrusionsschaumstoffe (XPS) und Polyurethanschaumstoffe (PUR) mit fluorierten Kohlenwasserstoffen als Zellgas, wie FCKW, HFCKW oder HFKW.

Durch Verkleinerung der Zellen bis Abmessungen unter der freien Weglänge der Gasmoleküle wird nicht nur der konvektive Wärmeübertragungsanteil unterbunden, sondern auch noch die Wärmeleitfähigkeit im Gas herabgesetzt, wodurch mit diesen Stoffen sehr niedrige Wärmeleitfähigkeiten erzielt werden. Beispiele hierfür sind mikorzelluläre Schaumstoffe wie Basogel® oder Mikrolite® .

Vor über 20 Jahren wurden Dämmstoffe entwickelt, durch die kurzwellige Solarstrahlung weitgehend transmittiert werden konnte. Wurde diese Strahlung hinter der Dämmschicht absorbiert, konnte die Solarstrahlung zur Wärmegewinnung genutzt werden. Durch die davor liegende transparente Dämmschicht haben sich die dahinter liegenden Wände aufgeheizt. Leider führt dieser im Winter erwünschte Effekt im Sommer zu so starker Erwärmung, dass durch zusätzliche Sonnenschutzvorkehrungen die Überhitzung verhindert werden muss.

Neuerdings werden, technisch das Eisbärenfell nachbildend (Bionik), Dämmstoffe propagiert, die das Prinzip der transparenten Wärmedämmung nutzen, aber bereits auf der rückwärtigen Oberfläche der Dämmschicht der Strahlungsabsorber integriert ist. Dabei bildet ein Textilgewebe aus Polyester die davor liegende Dämmschicht.

Wird im Dämmstoff ein Vakuum hergestellt, entfällt der Anteil der Gaswärmeleitung. Es verbleiben als Wärmetransportmechanismen nur noch die Wärmestrahlung und die Wärmeleitung in der Materialstruktur.

Bei der Weiterentwicklung von Schaumstoffen aus expanierbarem Polystyrol, die IRabsorbierende Partikel, wie Ruß oder Graphit enthalten, wird der Wärmetransport durch Wärmestrahlung reduziert.

Die WO 88/08906 beschreibt ein Dämmsystem zur Fassadenbekleidung, welche das Prinzip der opaken Wärmedämmung mit transparenter Abdeckung (OPTRA) nutzt. Hierbei kann kurzwellige Solarstrahlung in einen durch eine Glasabdeckung witterungsgeschützten Faserdämmstoff eindringen und wird im Eindringweg nahezu vollständig absorbiert. Als Fasermaterial werden insbesondere Kokosfasern, Flachs oder Holzspäne eingesetzt.

Dieses physikalische Funktionsprinzip bildet die Grundlage für neu zu entwickelnde Dämmstoffgenerationen. Es wird nicht alleine der physikalische Effekt der Wärmübertragung durch Leitung, Konvektion und Strahlung genutzt, sondern auch noch zusätzlich die Absorption kurzwelliger Strahlung innerhalb dieser wärmedämmenden Schicht. Das Anwendungsgebiet ist damit auf für die Solarstrahlung zugängliche Bereiche der Gebäudefassaden begrenzt.

Aufgabe der vorliegenden Erfindung war es, eine verbesserte Wärmedämmschicht für ein Wärmedämmverbundsystem aus eine opaken Wärmedämmschicht und einer transparenten Deckschicht zu finden, bei der durch Absorption kurzwelliger Solarstrahlung innerhalb der Wärmedämmschicht die effektive Leistungsfähigkeit gesteigert ist. Das Wärmedämmverbundsystem sollte sich insbesondere zur Verkleidung von Gebäudefassaden eignen.

Demgemäß wurde das oben beschriebene Wärmedämmverbundsystem gefunden.

Als hochtemperaturbeständige Kunststoffe eignen sich solche, die schäumbar oder zu Fäden spinnbar sind und erhöhte Temperaturen bis ca. 200°C ertragen können. Bevorzugt besteht die opake Wärmedämmschicht aus einem Schaumstoff mit einer Dichte im Bereich von 10 bis 400 kg/m³, insbesondere im Bereich 50 bis 150 kg/m³.

Bevorzugt wird als hochtemperaturbeständiger Kunststoff ein amorpher Thermoplast mit einer Gebrauchstemperatur im Bereich von 100 bis 220°C, beispielsweise Polysulfon (PSO), Polyethersulfon (PES) oder ein Styrol-Acrylnitril-Copolymer (SAN), Acrylnitril-Butadien-Styrol-Polymer (ABS) oder Acrylnitril-Styrol-Acrylester-Polymer (ASA) oder Mischungen davon eingesetzt.

Besonders bevorzugt wird eine Wärmedämmschicht aus einem Extrusionsschaumstoff der oben genannten hochtemperaturbeständigen Kunststoffe eingesetzt. Geeignete Extrusionsschaumstoffe aus PSO oder PES sind beispielsweise in US 5,017,622 oder EP-A 1 333 051 beschrieben. Des weiteren eignen sich die in der EP-A 1 479 717 beschriebenen, extrudierten Schaumstoffplatten aus Styrol-Acrylnitril-Copolymeren.

Extrusionsschaumstoffe aus Polysulfon oder Polyethersulfonen sind beispielsweise unter der Marke Ultratect® im Handel erhältlich sind. Durch zwei verschiedene Herstellverfahren - diskontinuierlich und kontinuierlich- sind derartige Schaumstoffe in einem weiten Dichte- und Eigenschaftsbereich zugänglich. So lässt sich die benötigte Druckfestigkeit durch die Wahl der Dichte einstellen. Die diskontinuierliche Fertigung ist prädestiniert für Schaumstoffblöcke im Kubikmetermaßstab. Hierzu wird PSO oder PES-Granulat mit Treibmittel, beispielsweise Methylethylketon (MEK) imprägniert und in einer beheizten Presse in Form gebracht. Der Schaumstoff zeichnet sich durch eine anisotrope Zellstruktur aus. In Steigrichtung sind die Zellen deutlich verlängert, so dass eine wabenartige Struktur entsteht

Für die kostengünstige und umweltfreundliche Herstellung von größeren Schaumstoffmengen wurde ein kontinuierliches Herstellverfahren entwickelt, das dem seit langem verwendeten Verfahren zur Herstellung von Polystyrolextrusionsschaumstoffen (XPS) ähnlich ist. Die kontinuierliche Fertigung erfolgt mittels einer Tandem-Extrusionsanlage. Abhängig von der Anlagengröße und je nach Breite und Stärke der hergestellten Endlosplatte können Bandgeschwindigkeiten von bis zu 20 Metern pro Minute erreicht werden. Die so gewonnenen Platten zeigen eine feine und gleichmäßige Zellstruktur.

Beide Schaumstoffmodifikationen zeichnen sich durch geringe Entflammbarkeit, Lösemittelbeständigkeit und eine hohe thermische Stabilität aus, was sie zum idealen Kernmaterial für Sandwichteile mit thermoplastischen Deckschichten macht. Mit einer Temperaturbeständigkeit von bis zu 210 Grad Celsius weist Ultratect® derzeit den besten Wert der am Markt verfügbaren thermoplastischen Schaumstoffe auf.

Als transparente Deckschicht (2) können Glas oder transparente Kunststoffe, beispielsweise Silikatglas, Polycarbonat (PC), Polymethylmethacrylat (PMMA) oder einem Styrol-Acrylnitril-Copolymer (SAN) eingesetzt werden.

Bevorzugt weist die opake Wärmedämmschicht (1) eine Dicke im Bereich von 10 bis 100 mm und die transparente Deckschicht (2) eine Dicke im Bereich von 1 bis 5 mm auf.

Werden an Gebäudefassaden wärmedämmende Materialschichten angeordnet, in die kurzwellige Strahlung aus Sonnenlicht eindringen kann, wird diese Strahlung in der Dämmschicht absorbiert, wodurch sie sich im Innern erwärmt. Durch geeignete Einstellung der Materialeigenschaften, wie der Rohdichte und der Strahlungsextinktion, kann dadurch auch bei sehr niedrigen Außenlufttemperaturen und geringen Strahlungsintensitäten die Materialschicht über Raumtemperatur erwärmt werden. Anders als bei der herkömmlichen Wärmedämmung wird dadurch der Wärmeabfluss durch die Gebäudewand nicht nur der Dämmleistung entsprechend reduziert, sondern während der Einstrahlungszeit der Sonne wird der Wärmeabfluss völlig unterbunden.

Je nach Einstellung der Materialeigenschaften der Dämmschicht kann in begrenztem Maße auch noch Wärme aus der Dämmschicht in die dahinter liegende Wand oder in das Gebäude fließen. In Kombination mit Wärmespeichermedien oder abgestimmt mit den Speichereigenschaften der Wand, kann die strahlungsfreie Zeit überbrückt werden und insgesamt ein Wärmedämmsystem mit einer effektiven Wärmeleitfähigkeit von ca. 0 W/(m K) realisiert werden.

Dieses Prinzip können wir in der Natur an Gewässern beobachten, wo die Sonneneinstrahlung beim Eintritt in den oberen Gewässerschichten absorbiert wird. Dadurch wird die Wasserschicht im oberflächennahen Bereich erwärmt. Die darunter liegenden Wasserschichten können sehr viel kälter sein.

Über die Schaumstoff- oder Wollvliesstruktur kann die Rohdichte und die Strahlungsextinktion so eingestellt werden, dass einerseits Sonnenschutzvorkehrungen überflüssig sind, andererseits aber auch bereits sehr niedrige Strahlungsintensitäten ausreichen, um den Wärmeabfluss völlig zu unterbinden.

In der Wärmedämmschicht wird durch Strahlungsabsorption eine über Raumlufttemperaturniveau liegende Temperatur erzeugt, die den Wärmeabfluss aus Gebäuden während der Sonneneinstrahlungszeit vollständig verhindert. Durch Kombination mit Wärmespeichern kann die einstrahlungsfreie Zeit überbrückt werden.

Das erfindungsgemäße Wärmedämmverbundsystem eignet sich insbesondere für die Verkleidung von Gebäudefassaden. Es macht den Anwender von der Energiepreisentwicklung unabhängig, weil auch ohne enorme Dämmschichtdicken damit gedämmte Gebäude keine zusätzlichen Heizungseinrichtungen brauchen.

## Patentansprüche

1. Wärmedämmverbundsystem, umfassend eine opake Wärmedämmschicht (1) und eine transparente Deckschicht (2), **dadurch gekennzeichnet, dass** die Wärmedämmschicht (1) aus einem Schaumstoff oder Faservlies eines hochtemperaturbeständigen Kunststoffes besteht.

2. Wärmedämmverbundsystem nach Anspruch 1, **dadurch gekennzeichnet, dass** der hochtemperaturbeständigen Kunststoff ein Polysulfon (PSO) oder Polyethersulfon (PES) ist.

3. Wärmedämmverbundsystem nach Anspruch 1, **dadurch gekennzeichnet, dass** der hochtemperaturbeständigen Kunststoff ein Styrol-Acrylnitril-Copolymer (SAN), Acrylnitril-Butadien-Styrol-Polymer (ABS) oder Acrylnitril-Styrol-Acrylester-Polymer (ASA) ist.

4. Wärmedämmverbundsystem nach einem der Ansprüche 1 bis 3, **dadurch gekennzeichnet, dass** die Wärmedämmschicht aus einem Extrusionsschaumstoff besteht.

5. Wärmedämmverbundsystem nach einem der Ansprüche 1 bis 4, **dadurch gekennzeichnet, dass** die transparente Deckschicht (2) aus Silikatglas, Polycarbonat (PC), Polymethylmethacrylat (PMMA) oder einem Styrol-Acrylnitril-Copolymer (SAN) besteht.

6. Wärmedämmverbundsystem nach einem der Ansprüche 1 bis 5, **dadurch gekennzeichnet, dass** die opakes Wärmedämmschicht (1) eine Dicke im Bereich von 10 bis 100 mm und die transparente Deckschicht (2) eine Dicke im Bereich von 1 bis 5 mm aufweist.

7. Wärmedämmverbundsystem nach einem der Ansprüche 1 bis 6, **dadurch gekennzeichnet, dass** die opake Wärmedämmschicht aus einem Schaumstoff mit einer Dichte im Bereich von 10 bis 400 kg/m³ besteht.

8. Verwendung des Wärmedämmverbundsystems nach einem der Ansprüche 1 bis 7 zur Verkleidung von Gebäudefassaden
